# EUROPEAN PATENT APPLICATION

(11) **EP 4 596 293 A1**
(43) Date of publication of application: **06.08.2025**
(21) Application number: 25152758.6
(22) Date of filing: 20.01.2025
(51) Int. Cl.: B60L 1/00

(54) **METHOD FOR CONTROLLING HYBRID ELECTRIC VEHICLE, CONTROLLER, MEDIUM, AND VEHICLE**

(30) Priority: 23.01.2024 CN 202410097861
(71) Applicant: BYD Company Limited, Shenzhen, Guangdong 518118 (CN)
(72) Inventor: WANG, Xinting, Shenzhen, 518118 (CN); HE, Canming, Shenzhen, 518118 (CN); XIA, Tian, Shenzhen, 518118 (CN); WANG, Xinqiang, Shenzhen, 518118 (CN); LUO, Jianxing, Shenzhen, 518118 (CN)
(74) Representative: Mathys & Squire

(57) **Abstract**

The present disclosure discloses a method for controlling a hybrid electric vehicle, a controller, a medium, and a vehicle. The method includes: A power generator is controlled to supply power to a cooling system when a thermal runaway state occurs in a traction battery of the vehicle, to cause the cooling system to cool down the traction battery. In view of the above, in the present disclosure, in the thermal runaway state, an engine is started to supply power to the entire vehicle. This can achieve rapid cooling of the traction battery in an emergency situation.

## Description

### FIELD

The present disclosure relates to the field of vehicle technologies, and in particular, to a method for controlling a hybrid electric vehicle, a controller, a medium, and a vehicle.

### BACKGROUND

During use of a traction battery, thermal runaway may occur in a single battery core. In this case, if no effective measures are taken, thermal runaway may occur sequentially in adjacent battery cores due to impact of a high temperature and smoke of the runaway battery core. This results in propagation of the thermal runaway, and finally leads to serious safety accidents. In the related art, a high voltage of a vehicle is disabled directly after the thermal runaway, to ensure that the battery cannot continue to be used. This treatment method is a relatively conservative approach, to avoid thermal runaway deterioration of the battery caused by electrical abuse after thermal runaway by disabling the high voltage.

Therefore, how to cool down the thermal runaway battery core when it is not on fire, so as to suppress the serious damage of thermal runaway at the source has become a problem that needs to be resolved urgently by a person skilled in the art.

### SUMMARY

A series of concepts in simplified forms are introduced in the SUMMARY section, which will be further described in detail in the DETAILED DESCRIPTION section. The SUMMARY section of the present disclosure is not intended to limit key features and necessary technical features of the claimed technical solutions, nor is it intended to determine the protection scope of the claimed technical solutions.

A first aspect of the present disclosure discloses a method for controlling a hybrid electric vehicle, including:

A power generator is controlled to supply power to a cooling system when a thermal runaway state occurs in a traction battery of the hybrid electric vehicle, to cause the cooling system to cool down the traction battery.

In an optional implementation, that a power generator is controlled to supply power to a cooling system includes:

An engine is controlled to be power coupled to the power generator, to cause the engine to drive the power generator to generate power; and/or the vehicle is controlled to perform kinetic energy recovery to supply power to the cooling system.

In an optional implementation, before the power generator is controlled to supply power to the cooling system, the method further includes:
A power supply system is used to start the engine when the engine is not started.

The power supply system includes an on-board power supply and an off-board power supply.

In an optional implementation, the on-board power supply includes a battery, a traction battery, and a solar panel. The off-board power supply includes a wired charging power supply and a wireless charging power supply.

In an optional implementation, the method for controlling a hybrid electric vehicle further includes:
When a power-off instruction of a user is received, execution of the power-off instruction is delayed and/or an operation prompt of forced power-off is displayed to the user.

In an optional implementation, before the power generator is controlled to supply power to the cooling system, the control method further includes:
A high voltage of the traction battery is controlled to be disabled.

In an optional implementation, the method for controlling a hybrid electric vehicle further includes:
Warning information is displayed through a speaker, a dashboard, or a central control screen to warn a user.

A second aspect of the present disclosure discloses a controller, including:

a processor, a memory, and a program or an instruction stored in the memory and runnable on the processor. The program or the instruction, when executed by the processor, implements the method according to any item of the first aspect of the present disclosure.

A third aspect of the present disclosure discloses a computer-readable storage medium, storing a computer instruction. When invoked, the computer instruction is configured to perform some or all of the steps in any method for controlling a hybrid electric vehicle disclosed in the first aspect of the present disclosure.

A fourth aspect of the present disclosure discloses a vehicle, including the controller according to the third aspect and/or the computer-readable storage medium according to the fourth aspect.

Compared with the related art, the present disclosure has the following beneficial effects:
After a thermal runaway fault occurs in a battery, an engine is controlled to drive a power generator to generate power to ensure normal operation of a compressor and a cooling system of the battery, and achieve cooling down of the thermal runaway battery. This is used to resolve the problem of heat spread in a hybrid electric vehicle after thermal runaway occurs, to reduce the harm of a thermal runaway accident and improve the safety performance of the entire vehicle.

It should be understood that the above general description and the following detailed description are only exemplary and explanatory, and should not be construed as a limitation to the present disclosure.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.
FIG. 1 is a schematic diagram of a high voltage system of an existing new-energy vehicle in normal operation and after a thermal runaway fault according to an embodiment of the present disclosure;
FIG. 2 is a schematic energy flow diagram of a method for controlling a hybrid electric vehicle according to an embodiment of the present disclosure;
FIG. 3 is a schematic flowchart of a method for controlling a hybrid electric vehicle according to an embodiment of the present disclosure;
FIG. 4 is a schematic flowchart of another method for controlling a hybrid electric vehicle according to an embodiment of the present disclosure; and
FIG. 5 is a schematic structural diagram of a controller according to an embodiment of the present disclosure.

### DETAILED DESCRIPTION

In order to make a person skilled in the art better understand the solutions of the present disclosure, the following clearly and completely describes the technical solutions of the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts fall within the protection scope of the present disclosure.

In the specification, claims, and accompanying drawings of the present disclosure, the terms such as "first" and "second" are intended to distinguish between different objects rather than indicate a particular order. In addition, the terms "include", "have", and any variant thereof are intended to cover non-exclusive inclusions. For example, a process, method, apparatus, product, or end that includes a series of steps or units is not limited to the listed steps or units; but instead, further optionally includes a step or unit that is not listed, or further optionally includes another step or unit that is intrinsic to the process, method, product, or end.

The "embodiment" mentioned herein means that a specific feature, structure, or characteristic described in combination with the embodiment may be included in at least one embodiment of the present disclosure. The term appearing in different parts of the specification does not necessarily refer to the same embodiment or an independent or alternative embodiment exclusive of other embodiments. A person skilled in the art explicitly or implicitly understands that the embodiments described in the specification may be combined with other embodiments.

To resolve the problem of how to cool down a hybrid electric vehicle during thermal runaway, the present disclosure provides a method for controlling a hybrid electric vehicle, a controller, a medium, and a vehicle.

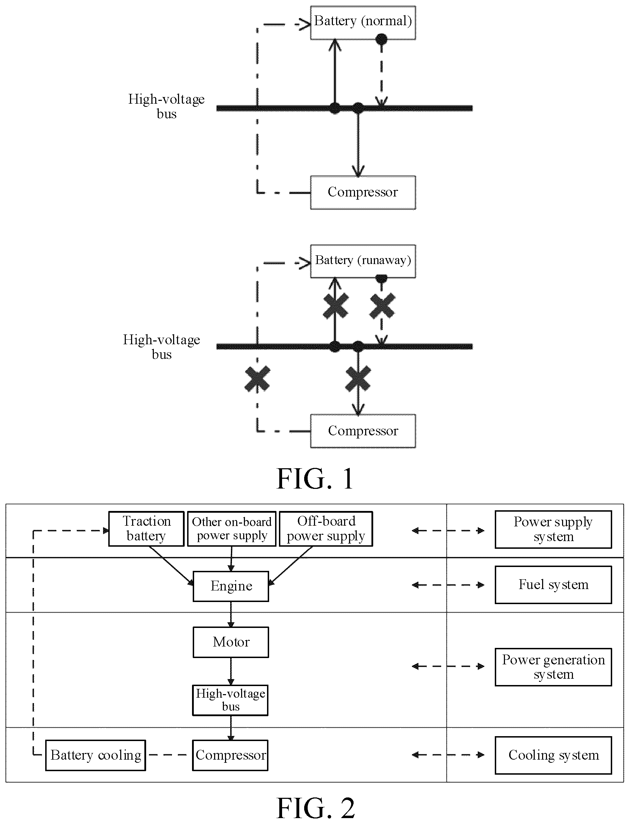

To help better understand the technical problem to be resolved in the present disclosure, reference is made to FIG. 1. FIG. 1 is a schematic diagram of an existing battery thermal runaway treatment method. As shown in FIG. 1, after thermal runaway of a battery of an electric vehicle, if the battery continues to be used, a degree of the thermal runaway may be further aggravated. Therefore, in the related art, a high voltage of the vehicle is disabled directly after the thermal runaway, to ensure that the battery cannot continue to be used, and avoid further heating of the battery. This treatment method is a relatively conservative approach, to avoid thermal runaway deterioration of the battery caused by electrical abuse after thermal runaway by disabling the high voltage. In electric vehicles, a hybrid electric vehicle has a dual power source of an engine and a traction battery. This proposes a new solution to resolve a thermal runaway problem of a battery. That is, after the thermal runaway of the battery, the engine can theoretically still provide a power source for other electrical systems in the vehicle to use.

Therefore, the present disclosure provides a method for controlling a hybrid electric vehicle, for maintaining operation of a cooling system by using an engine after thermal runaway of a battery, and providing cooling for a runaway traction battery to cool down a thermal runaway battery core. Such a method can greatly reduce a battery temperature after thermal runaway, reduce a risk of thermal runaway spreading, and reduce an amount of gas generated by thermal runaway, thereby reducing a risk of high temperature, fire, and explosion of a battery pack, greatly reducing a thermal runaway danger of a hybrid electric vehicle, and improving vehicle safety.

Referring to FIG. 2, FIG. 2 is a schematic energy flow diagram of a method for controlling a hybrid electric vehicle according to the present disclosure. As shown in the figure, the hybrid electric vehicle is divided into four systems: a power supply system configured to provide power, an engine configured to provide power by using an engine, a power generation system configured to receive energy of the power supply system or a fuel system to generate power, and a cooling system configured to use power to cool a battery. Generally, an energy flow path of the hybrid electric vehicle includes the following types:

The power supply system provides power to the cooling system, and the cooling system cools the power supply system.

The power supply system provides power to the power generation system, the power generation system supplies power to the cooling system, and the cooling system cools the power supply system.

The fuel system charges the power supply system, the power supply system provides power to the power generation system, the power generation system supplies power to the cooling system, and the cooling system cools the power supply system.

The fuel system converts power into electricity through the power generation system, the power generation system supplies power to the cooling system, and the cooling system cools the power supply system.

The above is a possible energy flow manner of the hybrid electric vehicle when a battery temperature is normal. An energy flow path of a method for controlling a hybrid electric vehicle in the present disclosure is as follows:

Optionally, after thermal runaway of the hybrid electric vehicle, a traction battery is powered off. In this case, the engine is not running, and the energy flow path is: The power supply system starts the fuel system, the fuel system provides energy for the power generation system, the power generation system supplies power to the cooling system, and the cooling system then cools the power supply system.

Optionally, after thermal runaway of the hybrid electric vehicle, a traction battery is powered off. In this case, the engine is running, and the energy flow path is: The engine directly provides energy to the power generation system, the power generation system supplies power to the cooling system, and the cooling system then cools the power supply system.

Specifically, the power supply system includes an on-board energy source and an off-board energy source. The cooling system includes an air cooling system, a liquid cooling system, and a solid cooling system. The fuel system includes the engine. The power generation system includes a motor and a high-voltage bus.

In view of the above, in the present disclosure, based on the feature that the hybrid electric vehicle has multiple power sources, in a case of thermal runaway of the battery and a disabled high voltage, energy is provided to the cooling system of the vehicle through the engine. In this way, while cooling down naturally without supplying power, the battery can also be cooled by the cooling system of the vehicle, achieving rapid cooling down. This avoids a tendency of the thermal runaway of the battery towards an extreme situation, thereby strongly protecting the safety of the vehicle.

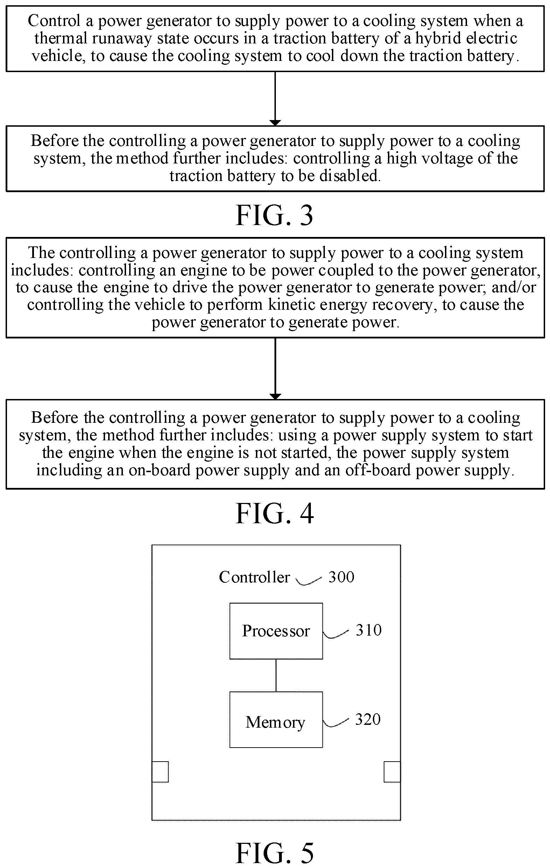

Referring to FIG. 3, FIG. 3 is a flowchart of a method for controlling a hybrid electric vehicle according to the present disclosure. The method includes:
S101: A power generator is controlled to supply power to a cooling system when a thermal runaway state occurs in a traction battery of the vehicle, to cause the cooling system to cool down the traction battery.

Specifically, in step S101, the hybrid electric vehicle may include any type of hybrid electric vehicle in which an engine and a motor are connected in series, parallel, or series-parallel, or with power split. A vehicle controller can determine a real-time temperature of the traction battery through a sensing device such as a temperature sensor built in the vehicle. The sensing device can reflect the current temperature of the traction battery in real time and send temperature sensing information to the vehicle controller. When the vehicle controller receives a reminder that the temperature of the traction battery exceeds a preset first threshold, it is considered that the traction battery has trended towards thermal runaway at this time. In this case, the vehicle controller controls the power generator to supply power to the cooling system to cause the cooling system to cool down the traction battery.

Optionally, the cooling system may include at least one of an air cooling system, a liquid cooling system, or a solid cooling system. Specific types and structures of the air cooling system and the liquid cooling system are not limited. Air cooling in the present disclosure refers to each system that uses gas to perform heat exchange for cooling. The density and size of the gas cannot constitute a limitation on the present disclosure. Liquid cooling in the present disclosure refers to each system that uses liquid to perform heat exchange for cooling. The density and type of the liquid cannot constitute a limitation on the present disclosure. The solid cooling system refers to a cooling system that exchanges heat with the traction battery in a solid manner. The type and density of the solid cannot constitute a limitation on the present disclosure. A cooling system can be classified as the cooling system in the present disclosure as long as it can cool and dissipate heat for the traction battery.

Optionally, the first threshold may be adaptively set according to different vehicles, different working conditions applied, and different environments. In the present disclosure, the first threshold is merely used as an objective determining reference, and a numerical range of the first threshold does not constitute a limitation on the present disclosure.

Specifically, according to an existing temperature sensing device of the vehicle, a first threshold and a second threshold of the temperature of the traction battery are preset. A temperature within the second threshold is less than that within the first threshold. When the temperature of the traction battery is less than the second threshold, it is considered as a normal state. When the temperature of the traction battery is greater than the second threshold and less than the first threshold, it is considered as a fault state. When the temperature of the traction battery is greater than the first threshold, it is considered as a thermal runaway state. In the normal state, the entire vehicle performs no other operations, and the vehicle operates normally. In the fault state, the temperature of the traction battery is high, but there is still some distance from the thermal runaway. In this case, the power of the cooling system is increased, and a user is prompted to stop the vehicle for checking. If the temperature of the battery is under control after measures are taken, the fault mode is exited. In the thermal runaway state, a battery pack may catch fire. In this case, the user is immediately reminded to stop the vehicle nearby and detect whether the engine is started. If yes, the engine is used as a power source to supply energy to the cooling system. If no, the engine is started through the power supply system to supply energy to the cooling system.

Optionally, in the thermal runaway state of the traction battery, the engine releases limitations such as NVH and energy consumption, and runs at a high speed to ensure that a compressor can continuously operate at a rated power, thereby improving a cooling capability of the cooling system of the battery. Under operation of the cooling system of the battery, the temperature of the thermal runaway battery drops continuously. When the temperature of the battery is less than the second threshold for a period of time, a cooling exit condition is reached, and the engine and the cooling system of the battery may be turned off.

For example, the cooling exit condition includes, but is not limited to: A thermal runaway abnormal signal is released, cooling is enabled for an agreed duration, the temperature of the battery is reduced below a target temperature, a user implements forced power-off measures in a fault working condition, or the like.

Optionally, in the thermal runaway state of the traction battery, the method for controlling a hybrid electric vehicle further includes: When a power-off instruction of a user is received, execution of the power-off instruction is delayed and/or an operation prompt of forced power-off is displayed to the user.

Specifically, when the traction battery is in the thermal runaway state, the engine is used as a power source to supply power to the entire vehicle, causing the cooling system to cool the battery. In this case, if the user powers off the entire vehicle, the cooling cannot continue. If the engine is not started, the power-off at this time seriously affects the safety of the entire vehicle. If the power generator is started, the user may be notified that the power can be cut off normally. Therefore, the user is notified that execution of the power-off instruction of the user is to be delayed. If the user quits powering off, the cooling continues. If the user still wants to power off, an operation prompt of forced power-off is displayed, and the user is reminded of a series of consequences that may result from forced power-off at this moment.

In view of the above, in the present disclosure, a status of the traction battery is determined based on the current temperature of the traction battery, and different treatment and control methods are set based on different temperatures. When the traction battery is in the thermal runaway state, the engine is used to supply power to the entire vehicle, to cause the cooling system to always keep operating, thereby ensuring the safety of the vehicle.

S102: Before the power generator is controlled to supply power to the cooling system, the method further includes:
A high voltage of the traction battery is controlled to be disabled.

Specifically, in the thermal runaway state of the traction battery, the traction battery is disconnected from supplying power to the entire vehicle, to prevent the temperature of the traction battery from further increasing. In addition, the traction battery is cooled in combination with the cooling system of the vehicle. In this way, the traction battery can be cooled by the cooling system even when the traction battery is not operating, allowing the temperature to be reduced to the maximum extent.

Optionally, in the thermal runaway mode of the battery, the vehicle controller sends warning information through a speaker, a dashboard and/or a central control screen, a head-up display, and the like, to prompt the user to stop and move away from the vehicle.

Further, in addition to sending the warning information, the user may be reminded, through a somatosensory contact manner such as vibrating a steering wheel or a seat, that the user is currently in an urgent state and needs to leave the vehicle immediately. After the temperature of the traction battery becomes stable, a mobile terminal SMS message is used to prompt that the current temperature of the battery of the vehicle has stabilized, but it is still recommended that the 4S store should be contacted for further processing.

In view of the above, in the present disclosure, energy supplying by the traction battery is disconnected to cause the traction battery to switch from a power supply state to a stop state, to avoid further increasing of the temperature. In addition, the engine is used as a power source to provide energy for the entire vehicle. In this way, the cooling system can still operate without the power supply by the traction battery, thereby achieving control of the thermal runaway of the traction battery, and improving the safety of the entire vehicle.

Referring to FIG. 4, FIG. 4 is a further detailed flowchart of the method for controlling a hybrid electric vehicle proposed in S101. The method includes the following steps:

S201: That the power generator is controlled to supply power to the cooling system includes:
The engine is controlled to be power coupled to the power generator, to cause the engine to drive the power generator to generate power, and/or the vehicle is controlled to perform kinetic energy recovery to supply power to the cooling system.

Specifically, in step S201, when the vehicle is in the thermal runaway state, the vehicle controller controls the engine to be power coupled to the power generator, to cause the engine to provide power to drive the power generator to generate electricity, to provide energy for the cooling system, and/or wheels drive the power generator to perform energy feedback to cause the power generator to generate electricity, and the obtained energy supplies power to the cooling system, to further improve energy utilization.

S202: Before the power generator is controlled to supply power to the cooling system, the method further includes:
A power supply system is used to start the engine when the engine is not started.

The power supply system includes an on-board power supply and an off-board power supply.

Specifically, in the thermal runaway state of the vehicle, before the high voltage of the vehicle is disabled, it is first detected whether the engine is started. If no, the power supply system is used to start the engine, and the engine serves as a power source to supply power to the entire vehicle, and/or the vehicle is controlled to perform kinetic energy recovery to supply power to the cooling system. Although the kinetic energy recovery has a short duration, the vehicle kinetic energy recovery of the vehicle may be connected to the power supply under thermal runaway by correspondingly arranging an energy storage apparatus and a boost apparatus on the vehicle, thereby improving the safety margin of the entire vehicle.

Optionally, the power supply system includes an on-board power supply and an off-board power supply.

Specifically, the on-board power supply includes a battery, a traction battery, a solar panel, and energy feedback power supply. The off-board power supply includes a wired charging power supply and a wireless charging power supply. The wired charging power supply includes direct current charging and alternating current charging. The wireless charging power supply includes dynamic wireless charging and static wireless charging.

Exemplarily, when the thermal runaway state occurs in the vehicle, the power supply system is the battery. In this case, the high voltage of the traction battery is disabled. The battery is reverse-boosted to supply power to the engine to start the engine. The engine then starts the cooling system to cool the traction battery.

Exemplarily, when the thermal runaway state occurs in the vehicle, the power supply system is the traction battery. The high voltage of the traction battery is disabled, and there is a period of time from receiving an instruction to being disconnected. Before the disconnection, the traction battery supplies power to the engine to drive the engine to start. Alternatively, an emergency backup power supply is arranged inside the battery pack. In a general working condition, the power supply is first performed by another battery, and the emergency backup power supply does not work or works little. After the thermal runaway, the emergency backup power supply supplies power to the engine to start the engine. The engine then starts the cooling system to cool the traction battery.

Exemplarily, when the thermal runaway state occurs in the vehicle, the power supply system is a solar panel. On a vehicle that uses energy converted by the solar panel as part or all of power supply, after thermal runaway occurs in the battery, the engine may be started by using the energy of the solar panel, and the engine then starts the cooling system to cool the traction battery.

Exemplarily, when the thermal runaway state occurs in the vehicle, the power supply system is energy feedback power supply. Energy provided by braking feedback supplies power to the engine, and the engine then starts the cooling system to cool the traction battery.

Exemplarily, when the thermal runaway state occurs in the vehicle and the vehicle is being charged, the engine may be started by using an off-board energy source. For example, in a wired charging mode, the engine is started by using energy of a charging pile and charging is temporarily stopped. In a wireless charging mode, the engine is started by using energy of electromagnetic induction under wireless charging, the charging is temporarily stopped, and the engine is then used to drive the cooling system to cool the traction battery.

It may be understood that the foregoing embodiments may be implemented in combination with each other or separately, and any solution in which only simple combination is performed without creative efforts still falls within the scope of the present disclosure.

In view of the above, in the present disclosure, the on-board energy source and/or the off-board energy source is used to supply power to the engine in an emergency situation of thermal runaway, to drive the power generator to start. The power generator supplies power to the cooling system, and then the cooling system cools the battery. In this way, even if the traction battery cannot supply power, the engine can still be started by using another energy source. This increases a safety margin for the vehicle and improves the safety of the entire vehicle.

The present disclosure further provides a controller 300, as shown in FIG. 5, including: a processor 310, a memory 320, and a computer program stored in the memory and runnable on the processor. When the processor executes the program, the controller implements the method for controlling a hybrid electric vehicle according to the foregoing embodiment.

Optionally, the memory and the processor are both inside the controller, but the memory may alternatively be located outside the controller. A position of the memory is not limited.

According to an embodiment of the present disclosure, a computer-readable storage medium is further provided. The storage medium stores a program instruction. When run by a computer or a processor, the program instruction is used to perform the corresponding steps of the method for controlling a hybrid electric vehicle in the embodiments of the present disclosure, and is used to implement the corresponding modules configured to control the vehicle according to the embodiments of the present disclosure.

The computer-readable storage medium may include, for example, a storage component of a tablet computer, a hard disk of a personal computer, a read-only memory (ROM), an erasable programmable read-only memory (EPROM), a compact disk read-only memory (CD-ROM), a USB memory, or any combination of the above storage mediums. The computer-readable storage medium may be any combination of one or more computer-readable storage mediums. For example, one computer-readable storage medium includes computer-readable program code for randomly generating an action instruction sequence, and another computer-readable storage medium includes computer-readable program code for controlling crystal growth.

The present disclosure further provides a vehicle, including the controller described above and/or the computer-readable storage medium described above.

It may be understood that the processor in the embodiments of the present disclosure may be an integrated circuit chip, and has a signal processing capability. In an implementation process, the steps of the foregoing method embodiment may be completed by using a hardware integrated logic circuit in the processor or instructions in a form of software. The foregoing processor may be a general-purpose processor, a digital signal processor (DSP), an application-specific integrated circuit (ASIC), a field programmable gate array (FPGA) or another programmable logic device, a discrete gate or transistor logic device, or a discrete hardware component.

It may be understood that the memory in the embodiments of the present disclosure may be a volatile memory or a non-volatile memory, or may include both a volatile memory and a non-volatile memory. The non-volatile memory may be a ROM, a programmable ROM (PROM), an EPROM, an electrically EPROM (EEPROM), or a flash memory. The volatile memory may be a random access memory (RAM), which is used as an external cache. By way of exemplary but not restrictive description, many forms of RAMs may be used, for example, a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), and a direct rambus RAM (DRRAM). It should be noted that the memories in the system and method described in this specification are intended to include, but not limited to, these memories and any other suitable types of memories.

Finally, it should be noted that: the method for controlling a hybrid electric vehicle, and the controller, the storage medium, and the vehicle including the method disclosed in the embodiments of the present disclosure are merely exemplary embodiments of the present disclosure, and are merely used for describing the technical solutions of the present disclosure, but are not intended to limit the present disclosure. Although the present disclosure is described in detail with reference to the foregoing embodiments, it should be appreciated by a person skilled in the art that, modifications may still be made to the technical solutions described in the foregoing embodiments, or equivalent replacements may be made to some of the technical features. However, these modifications or replacements do not make the essence of the corresponding technical solutions depart from the spirit and scope of the technical solutions of the embodiments of the present disclosure.

## Claims

1. A method for controlling a hybrid electric vehicle, comprising:
controlling a power generator to supply power to a cooling system when a thermal runaway state occurs in a traction battery of the vehicle, to cause the cooling system to cool down the traction battery.

2. The method according to claim 1, wherein controlling the power generator to supply power to the cooling system comprises:
controlling an engine to be power coupled to the power generator, to cause the engine to drive the power generator to generate power; and/or controlling the vehicle to perform kinetic energy recovery to supply power to the cooling system.

3. The method according to claim 2, before controlling the power generator to supply power to the cooling system, the method further comprising:
using a power supply system to start the engine when the engine is not started, the power supply system comprising an on-board power supply and an off-board power supply.

4. The method according to claim 3, wherein the on-board power supply comprises a battery, a traction battery, and a solar panel, and the off-board power supply comprises a wired charging power supply and a wireless charging power supply.

5. The method according to claim 1, further comprising:
when a power-off instruction of a user is received, delaying execution of the power-off instruction and/or displaying an operation prompt of forced power-off to the user.

6. The method according to claim 1, wherein before controlling the power generator to supply power to the cooling system, the method further comprises:
controlling a high voltage of the traction battery to be disabled.

7. The method according to claim 6, further comprising:
displaying warning information through a speaker, a dashboard, or a central control screen to warn a user.

8. A controller, comprising a processor, a memory, and a program or an instruction stored in the memory and runnable on the processor, the program or the instruction, when executed by the processor, implementing the method according to any one of claims 1 to 7.

9. A computer-readable storage medium, storing a computer program, the computer program, when run, implementing the method according to any one of claims 1 to 7.

10. A vehicle, comprising the controller according to claim 8, and/or the computer-readable storage medium according to claim 9.
